# FASCICULE DE BREVET EUROPEEN

(11) **EP 1 696 724 B1**
(45) Date de publication et mention de la délivrance du brevet: **16.07.2008**
(21) Numéro de dépôt: 04816395.0
(22) Date de dépôt: 16.12.2004
(51) Int. Cl.: A01M 1/20

(54) **POT FUMIGENE**
RAUCHTOPF
SMOKE POT

(30) Priorité: 17.12.2003 FR 0314826
(43) Date de publication de la demande: 06.09.2006
(73) Titulaire: Laboratoire de Chimie et de Biologie - L.C.B., 71260 La Salle (FR)
(72) Inventeur: GUICHARD, Laurent, F-01380 Bage La Ville (FR); BIZET, Bruno, F-71260 Montbellet (FR)
(74) Mandataire: Puiroux, Guy
(86) Numéro de dépôt international: PCT/FR2004/003255
(87) Numéro de publication internationale: WO 2005/058031

(56) Documents cités:
- FR-A- 959 050
- FR-A- 2 637 459
- GB-A- 655 769
- GB-A- 699 766
- GB-A- 715 812

## Description

La présente invention concerne un dispositif fumigène du type comportant une charge pulvérulente fumigène insecticide, bactéricide, fongicide, de signalisation ou similaire contenue dans un récipient muni de moyens d'allumage de ladite charge fumigène.

Dans le domaine des dispositifs fumigènes, on connaît bien des pots fumigènes généralement constitués d'un pot métallique contenant une charge fumigène, sous forme de poudre, de poudre compressée ou de pastilles, destinée à être allumée par une mèche partiellement immergée dans la charge fumigène ; c'est le cas, par exemple, du brevet français FR 2 637 459 qui décrit un fumigène insecticide bactéricide ou fongicide. Ce fumigène est du type comprenant du nitrate d'ammonium, du dicyandiamide, de la silice, des solvants chlorés ou chlorés solides et éventuellement des adjuvants conditionnés dans un récipient équipé de moyens d'allumage. La matière active fongicide, insecticide ou bactéricide est conditionnée dans un sachet obtenu dans un matériau imperméable, résistant aux différents autres produits contenus dans le récipient, et fusible à une température inférieure à la température de fumigation.

Le brevet américain US 3 340 569 décrit, par ailleurs, un pot fumigène constitué d'un pot cylindrique muni à son extrémité supérieure d'un couvercle à vis. Ledit pot est rempli d'une charge fumigène constituée de pastilles d'une composition solide fumigène enveloppées dans une feuille métallique et à l'intérieur de laquelle débouche une cordelette d'amorçage qui est constituée d'une cordelette en coton imprégnée d'une charge pyrotechnique.

Ce type de dispositif fumigène présente une fiabilité insuffisante. En effet, la mèche en coton imbibée d'une charge pyrotechnique dégage lorsque la charge pyrotechnique est mal répartie dans la mèche lors de sa fabrication, une chaleur insuffisante lorsque le front de combustion de la mèche plonge dans la charge pulvérulente fumigène voire même s'éteint en atteignant ladite charge fumigène.

Le but de l'invention est donc de remédier à cet inconvénient en proposant un dispositif fumigène de conception simple, peu onéreuse et qui procure un allumage fiable de la charge fumigène.

Conformément à l'invention, il est proposé un dispositif fumigène du type comportant une charge pulvérulente fumigène insecticide, bactéricide, fongicide, de signalisation ou similaire contenue dans un récipient muni de moyens d'allumage de ladite charge fumigène remarquable en ce qu'il est constitué d'une part d'un support destiné à maintenir globalement verticalement une première enveloppe dite interne ouverte à son extrémité supérieure et fermée à son extrémité inférieure par un opercule thermofusible, la charge pulvérulente fumigène étant positionnée dans ladite enveloppe interne, et d'autre part des moyens de combustion positionnés sous l'enveloppe interne au contact de l'opercule thermofusible.

On comprend bien que, contrairement aux dispositifs de l'art antérieur où l'allumage de la charge fumigène était procuré par une mèche imprégnée d'une charge pyrotechnique partiellement immergée dans ladite charge fumigène depuis son extrémité supérieure, l'allumage de la charge pulvérulente fumigène du dispositif conforme à l'invention s'effectue par le dessous du récipient contenant la charge fumigène améliorant de manière notable son allumage.

Les moyens de combustion consistent de préférence en une pastille de charbon comprenant sur l'une de ses faces un creux formant une cuvette au fond de laquelle prend appui le bord de la petite base de l'enveloppe interne munie de son opercule thermofusible.

De plus, l'enveloppe interne consiste de préférence en une enveloppe globalement tronconique dont la grande base ouverte se situe au dessus de sa petite base fermée par l'opercule thermofusible.

D'autres avantages et caractéristiques ressortiront mieux de la description qui va suivre, de plusieurs variantes d'exécution, données à titre d'exemples non limitatifs, du dispositif fumigène conforme à l'invention, en référence aux dessins annexés sur lesquels :
- La figure 1 est une vue en perspective éclatée du dispositif fumigène suivant l'invention,
- La figure 2 est une vue en coupe transversale du dispositif conforme à l'invention,
- La figure 3 est une vue en perspective éclatée d'une variante d'exécution du dispositif fumigène suivant l'invention,
- La figure 4 est une vue en coupe transversale de la variante d'exécution du dispositif conforme à l'invention représentée à la figure 3,
- La figure 5 est une vue en perspective éclatée d'une seconde variante d'exécution du dispositif fumigène suivant l'invention,
- La figure 6 est une vue en coupe transversale de la variante d'exécution du dispositif fumigène conforme à l'invention représentée à la figure 5,
- La figure 7 est une vue en perspective éclatée d'une troisième variante d'exécution du dispositif fumigène suivant l'invention,
- La figure 8 est une vue en coupe transversale de la variante d'exécution du dispositif fumigène représentée à la figure 7,
- La figure 9 est une vue en perspective éclatée de la quatrième variante d'exécution du dispositif fumigène conforme à l'invention,
- La figure 10, est une vue en coupe transversale de la variante d'exécution du dispositif fumigène représentée à la figure 9,
- La figure 11 est une vue en perspective éclatée d'une cinquième variante d'exécution du dispositif fumigène conforme à l'invention,
- La figure 12 est une vue en coupe transversale de la variante d'exécution du dispositif fumigène suivant l'invention représentée à la figure 11,
- La figure 13 est une vue en coupe du dispositif fumigène suivant l'invention positionnée sur une embase d'allumage.
- La figure 14 est une vue en coupe transversale d'une variante d'exécution du dispositif comportant un grand volume de fumigène.

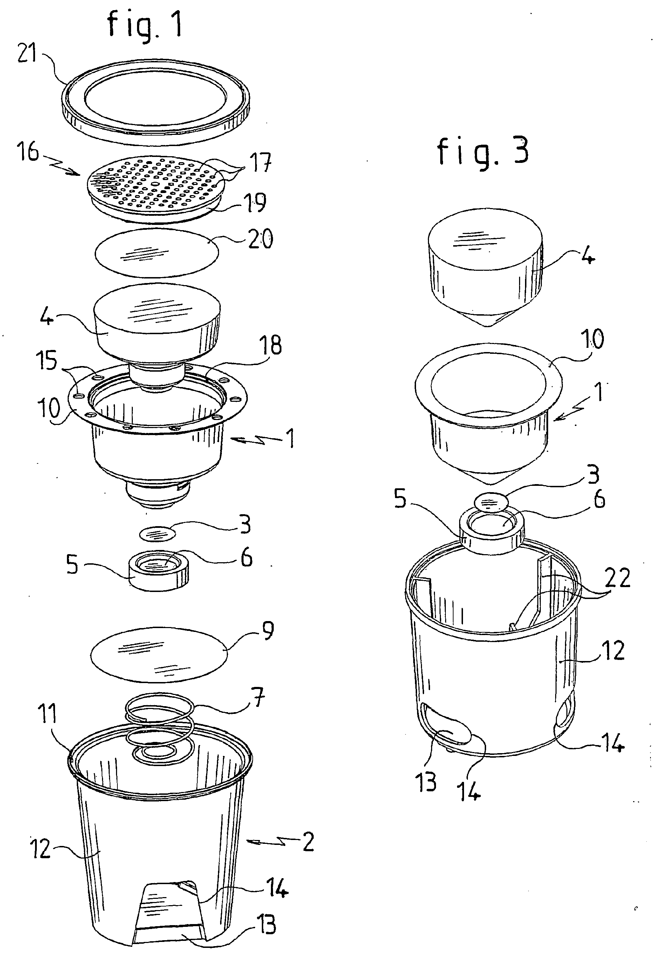

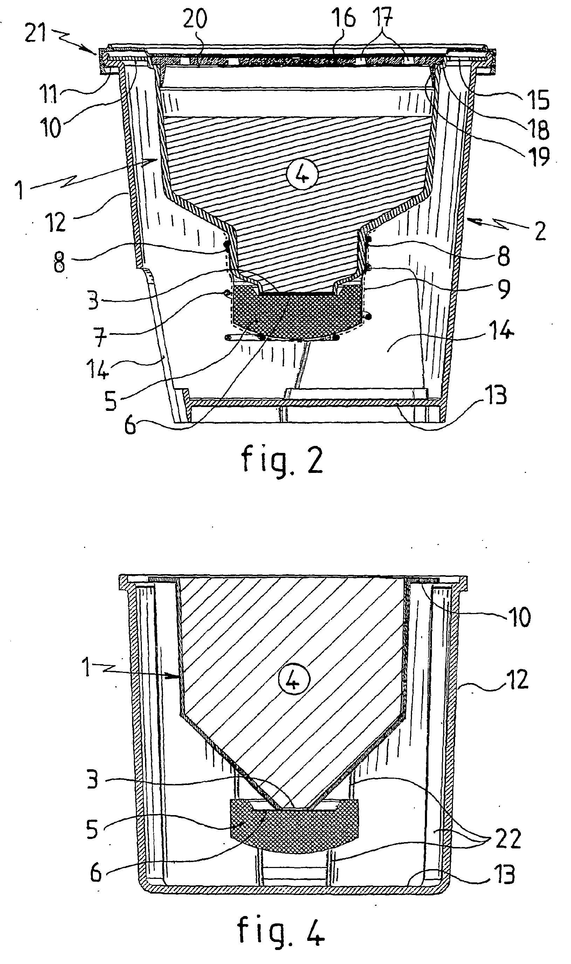

En référence aux figures 1 et 2, le dispositif fumigène suivant l'invention comporte une enveloppe dite interne 1 constituée d'un corps de forme globalement tronconique, obtenu dans un matériau ignifuge ou présentant une forte résistance au feu, tel que du polyamide chargé en fibre de verre, par exemple, maintenu globalement verticalement par un support 2 de telle sorte que la grande base de l'enveloppe interne 1 s'étende au dessus de sa petite base. Cette dernière est fermée par un opercule thermofusible 3 consistant, par exemple, en un film de polypropylène ou en un film de chlorure de polyvinyle ou en un film de polyéthylène qui présente une épaisseur de quelques microns, de telle manière que ladite enveloppe interne 1 puisse contenir une charge fumigène 4 appropriée, telle qu'une charge fumigène pulvérulente insecticide, bactéricide, fongicide, de signalisation ou analogue.

Il est bien évident que l'opercule 3 peut être obtenu dans tout matériau thermofusible bien connu de l'Homme de l'Art et que la charge fumigène 4 peut se présenter sous la forme de poudre compressée ou comprimée suivant une forme similaire à la forme de l'enveloppe interne 1, de pastilles ou similaire sans pour autant sortir du cadre de l'invention.

Le dispositif comprend, par ailleurs, des moyens de combustion de la charge fumigène 4 contenue dans l'enveloppe interne 1 consistant en une pastille de charbon 5 du type des pastilles de poudre de charbon compressée utilisées pour la combustion du tabac dans les narguilés. La pastille de charbon 5 comprend sur l'une de ses faces un creux 6 formant une cuvette au fond de laquelle prend appui le bord de la petite base de l'enveloppe interne 1 muni de son opercule thermofusible 3. Ladite enveloppe interne 1 comprend des moyens dits de retenue assurant le maintien de la pastille de charbon 5 contre l'opercule thermofusible 3 de sa petite base. Ces moyens de retenue consistent en un ressort hélicoïdal 7 fermé à l'une de ses extrémités, de section circulaire tout juste supérieure à la section de la pastille de charbon 5 afin de permettre le positionnement de ladite pastille 5 entre les spires du ressort 7, et dont l'extrémité libre est apte à coopérer avec des moyens de fixation constitués de deux ergots radiaux 8 diamétralement opposés solidaires de la paroi extérieure de l'enveloppe interne 1 à proximité de sa petite base. On observera que l'enveloppe interne 1 comprend à proximité de sa petite base un rétrécissement de sa section de telle sorte que, à hauteur des ergots radiaux 8, ladite enveloppe interne 1 présente une section globalement égale à la section des spires du ressort hélicoïdal 7. De plus, le dispositif comprend avantageusement un film d'étanchéité thermofusible 9 représenté en traits pointillés sur la figure 2, placé entre les spires du ressort hélicoïdal 7 et la pastille de charbon 5 afin de la protéger contre l'humidité et éviter la dissémination de poussière de charbon en cas de délitage de ladite pastille 5.

L'enveloppe interne 1 comprend, par ailleurs, à proximité de son extrémité supérieure, c'est-à-dire à proximité de sa grande base, une collerette périphérique 10 apte à prendre appui sur un épaulement 11 pratiqué à l'extrémité supérieure d'une seconde enveloppe dite externe 12, formant support 2, de telle sorte que ladite enveloppe interne 1 s'étende coaxialement à l'enveloppe externe 12 à l'intérieur de cette dernière en formant un espace entre la paroi intérieure de l'enveloppe externe 12 et la paroi extérieure de l'enveloppe interne 1. Cette enveloppe externe 12 consiste en un pot tronconique évasé depuis son fond 13 vers son extrémité supérieure ouverte et obtenue dans du polypropylène, par exemple. La hauteur de l'enveloppe externe 12 est supérieure à la hauteur de l'enveloppe interne 1 de telle sorte que, lorsque la collerette périphérique 10 de l'enveloppe interne 1 prend appui sur l'épaulement 11 pratiqué à l'extrémité supérieure de l'enveloppe externe 12 un espace de dégagement suffisant soit formé entre l'extrémité inférieure de la pastille de charbon 5 maintenue contre l'extrémité inférieure de l'enveloppe interne 1 par le ressort hélicoïdal 7 et le fond 13 de l'enveloppe externe 12 afin de permettre l'introduction de moyens d'allumage telle qu'une allumette par exemple sous la pastille de charbon 5. Afin de permettre l'introduction d'une allumette jusqu'au droit de la pastille de charbon 5, juste au-dessous de cette dernière, pour initier sa combustion, l'enveloppe externe 12 comprend des ouvertures 14 pratiquées dans sa paroi latérale à proximité de son extrémité inférieure. Dans cet exemple particulier de réalisation, non limitatif, l'enveloppe externe 12 comprend trois ouvertures 14 uniformément réparties autour de l'enveloppe externe 12. Ces ouvertures 14 présentent une forme globalement trapézoïdale de grandes bases globalement confondues avec le fond 13 de l'enveloppe externe 12 et de petites bases s'étendant juste au-dessus de l'extrémité inférieure de l'enveloppe interne 1. Ces ouvertures 14 permettent, outre l'introduction d'une allumette jusqu'à la pastille de charbon 5, une circulation de l'air entre l'enveloppe externe 12 et l'enveloppe interne 1 depuis le fond 13 vers l'extrémité supérieure de ladite enveloppe externe 12, l'air passant à travers des trous 15 pratiqués dans la collerette périphérique 10 de l'enveloppe interne 1. Ces trous 15 présentent une forme circulaire et sont régulièrement espacés autour de la collerette 10 ; toutefois, on notera que le nombre, la forme, et les dimensions de ces trous 15 peuvent être variables et facilement adaptés par l'Homme de l'Art afin de permettre une circulation d'air suffisante entre l'enveloppe interne 1 et l'enveloppe externe 12 pour attiser la combustion de la pastille de charbon 5. Par ailleurs, on observera que la circulation d'air entre l'enveloppe interne 1 et l'enveloppe externe 12 procure une isolation thermique de ladite enveloppe externe permettant ainsi à un utilisateur de se saisir du dispositif lors de la combustion de la charge fumigène sans se brûler, la circulation d'air refroidissant l'enveloppe externe 12.

Par ailleurs, l'enveloppe interne 1 est fermée à son extrémité supérieure par un capot 16 perforé et amovible, les perforations 17 du capot 16 permettant, outre l'échappement des fumées produites par la combustion de la charge fumigène 4 contenue dans l'enveloppe interne 1 initiée par la combustion de la pastille de charbon 5, de limiter la projection de poudre incandescente. Ce capot 16 prend appui sur un petit épaulement 18 pratiqué à l'extrémité supérieure de l'enveloppe interne 1 et il est maintenu en place à ladite extrémité par une jupe interne 19 prenant appui sur le bord interne supérieur de l'enveloppe interne 1. Ce capot 16 comprend, par ailleurs un troisième film thermofusible 20 prenant appui sur la paroi intérieure dudit capot 16 afin d'obturer les perforations 17 de ce dernier. Il va de soi que les perforations 17 du capot 16 peuvent être obturés par un film thermofusible 20 positionné sur la paroi intérieure et/ou extérieure du capot sans sortir du cadre de l'invention.

Par ailleurs, en référence aux figures 1 et 2, le dispositif comprend un couvercle 21 qui vient se fixer, par déformation plastique, sur le bord supérieur de l'enveloppe externe 12 et qui comprend, dans sa partie centrale, un creux circulaire apte à recevoir le fond 13 de l'enveloppe externe 12 d'un second dispositif pour faciliter le gerbage desdits dispositifs.

On expliquera maintenant en référence aux figures 1 et 2, le fonctionnement du dispositif fumigène suivant l'invention.

Une allumette est introduite par l'une des ouverture 14 pratiquées à l'extrémité inférieure de l'enveloppe externe 12 du dispositif, de telle sorte que la flamme de l'allumette viennent lécher la pastille de charbon 5 jusqu'à ce que la combustion de cette dernière soit initiée. La combustion de la pastille de charbon 5 attisée par la circulation d'air s'effectuant entre les ouvertures 14 de l'enveloppe externe 12 et les trous 15 de la collerette périphérique 10 de l'enveloppe interne 1, dégage de la chaleur qui fait fondre l'opercule thermofusible 3 fermant initialement l'enveloppe interne 1 mettant ainsi en contact la charge pulvérulente fumigène 4 et la pastille de charbon 5 ardente initiant ainsi la combustion de ladite charge fumigène 4. La combustion de la charge fumigène 4 entraîne, outre une production de fumée, une production de chaleur qui fait fondre le film thermofusible 20 positionné sur la paroi intérieure du capot 16 fermant l'extrémité supérieure de l'enveloppe interne 1. La combustion du film thermofusible 20 procure le dégagement des perforations 17 du capot 16 permettant ainsi de libérer la fumée dégagée par la combustion de la charge pulvérulente fumigène 4.

Selon une première variante d'exécution du dispositif fumigène suivant l'invention, en référence aux figures 3 et 4, ce dernier est constitué de la même manière que précédemment d'une première enveloppe dite interne 1 globalement tronconique de telle sorte que la grande base de ladite enveloppe 1 se situe au-dessus de sa petite base qui est fermée par un opercule thermofusible 3, une charge pulvérulente fumigène 4 étant positionnée dans ladite enveloppe interne 1. Le dispositif comprend, par ailleurs, une seconde enveloppe dite externe 12, formant un support 2 de la première enveloppe interne 1. Cette enveloppe externe 12 consiste en un pot cylindrique muni sur sa paroi latérale, à proximité de son fond 13, d'ouvertures 14, et munie de parois verticales internes 22. Ces parois verticales internes 22 sont aptes à recevoir d'une part des moyens de combustion consistant en une pastille de charbon 5 de telle sorte que ladite pastille 5 s'étende globalement parallèlement au fond 13 de l'enveloppe externe 12 au-dessus de ce dernier en laissant un espace suffisant pour l'introduction d'une allumette entre le fond 13 et l'extrémité inférieure de la pastille 5 et d'autre part l'enveloppe interne 1 dont la collerette périphérique 10 issue de son extrémité supérieure prend appui sur les bords supérieurs des parois verticales internes 22 de manière à ce que l'extrémité inférieure de l'enveloppe interne 1 prenne appui sur la face supérieure de la pastille de charbon 5 et à ce que l'enveloppe interne 1 s'étende coaxialement à l'enveloppe externe 12 à l'intérieur de cette dernière en formant un espace entre la paroi intérieure de l'enveloppe externe 12 et la paroi extérieure de l'enveloppe interne 1. De plus, le diamètre de la collerette périphérique 10 est légèrement inférieure au diamètre de l'enveloppe externe 12 procurant ainsi un espace entre le bord de la collerette périphérique 10 et la paroi intérieure de l'enveloppe externe 12 afin de permettre une circulation de l'air entre l'enveloppe externe 12 et l'enveloppe interne 1 depuis le fond 13 vers l'extrémité supérieure de ladite enveloppe externe 12 pour attiser la combustion de la pastille de charbon 5.

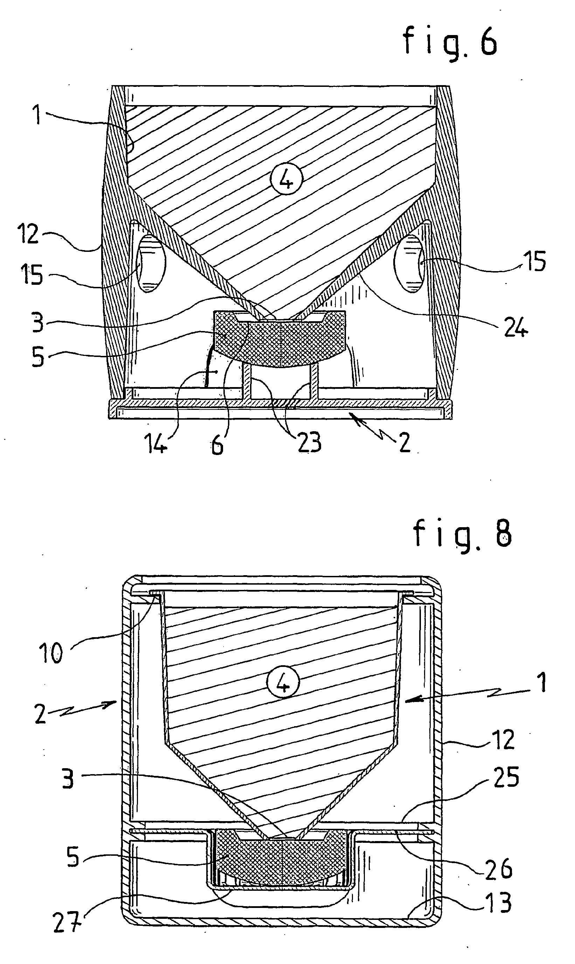

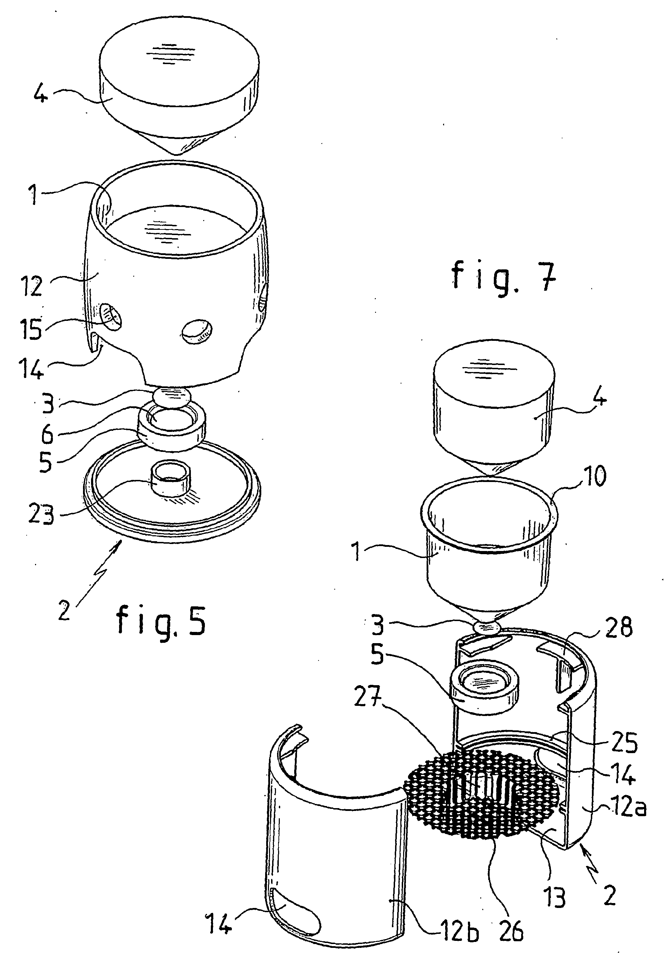

Selon une seconde variante d'exécution du dispositif fumigène conforme à l'invention, en référence aux figures 5 et 6, ce dernier est constitué d'un plateau de support 2 formant un fond en forme de disque muni dans sa partie centrale d'un plot cylindrique 23 sur lequel est apte à prendre appui une pastille de charbon 5. Ce fond support 2 est apte à être coiffé par une enveloppe dite externe 12 globalement cylindrique munie d'une paroi interne tronconique 24 délimitant une seconde enveloppe dite interne = 1 dans laquelle est positionnée une charge pulvérulente fumigène 4 et dont l'extrémité inférieure ouverte de l'enveloppe dite interne 1 est fermée par un opercule thermofusible 3 qui, lorsque l'enveloppe externe 12 coiffe le fond support 2, prend appui dans le creux 6 de la face supérieure de la pastille de charbon 5. Cette enveloppe externe 12 comprend, par ailleurs, à son extrémité inférieure des ouvertures 14 pour permettre l'introduction de moyens d'allumage, tels qu'une allumette par exemple, jusqu'au droit de la pastille de charbon 5 et des trous 15 positionnés globalement dans la partie médiane de l'enveloppe externe 12 juste en dessous de la paroi tronconique 24 délimitant l'enveloppe interne 1 afin d'assurer une circulation d'air entre les ouvertures inférieures 14 et les trous 15 médians.

Selon une troisième variante d'exécution le dispositif suivant l'invention, en référence aux figures 7 et 8, ce dernier comprend un support 2 constitué d'une enveloppe dite externe 12 de forme cylindrique comportant deux parties 12a, 12b respectivement munies dans leurs parties inférieures d'une gorge annulaire 25 apte à recevoir une grille circulaire 26 emportant dans sa partie centrale un creux 27 formant un godet apte à recevoir une pastille de charbon 5. L'enveloppe externe 12 comprend, par ailleurs, à proximité de son fond 13, des ouvertures 14 pratiquées sur la paroi latérale de ladite enveloppe externe 12 afin de permettre l'introduction d'une allumette jusqu'à la pastille de charbon 5 positionnée dans le creux 27 de la grille 26. L'enveloppe externe 12 comprend, par ailleurs, des joues internes 28, s'étendant à proximité de l'extrémité supérieure ouverte de l'enveloppe externe 12 depuis sa paroi intérieure en direction de l'axe de révolution de ladite enveloppe externe 12, et sur lesquelles prennent appui la collerette périphérique 10 s'étendant à l'extrémité supérieure d'une enveloppe dite interne 1 de forme globalement tronconique fermée à son extrémité inférieure par un opercule thermofusible 3. Ainsi, ladite enveloppe interne 1 s'étend coaxialement à l'enveloppe externe 12 à l'intérieur de cette dernière en formant un espace entre la paroi intérieure de l'enveloppe externe 12 et la paroi extérieure de l'enveloppe interne 1 de telle sorte que l'extrémité inférieure de ladite enveloppe interne 1 prenne appui sur la face supérieure de la pastille de charbon 5. On observera que le diamètre de la collerette périphérique 10 de l'enveloppe interne 1 est légèrement inférieur au diamètre interne de l'enveloppe externe 12 permettant ainsi une circulation de l'air entre l'enveloppe externe 12 et l'enveloppe interne 1 depuis le fond 13 vers l'extrémité supérieure de ladite enveloppe externe 12 de manière à attiser la combustion de la pastille de charbon.

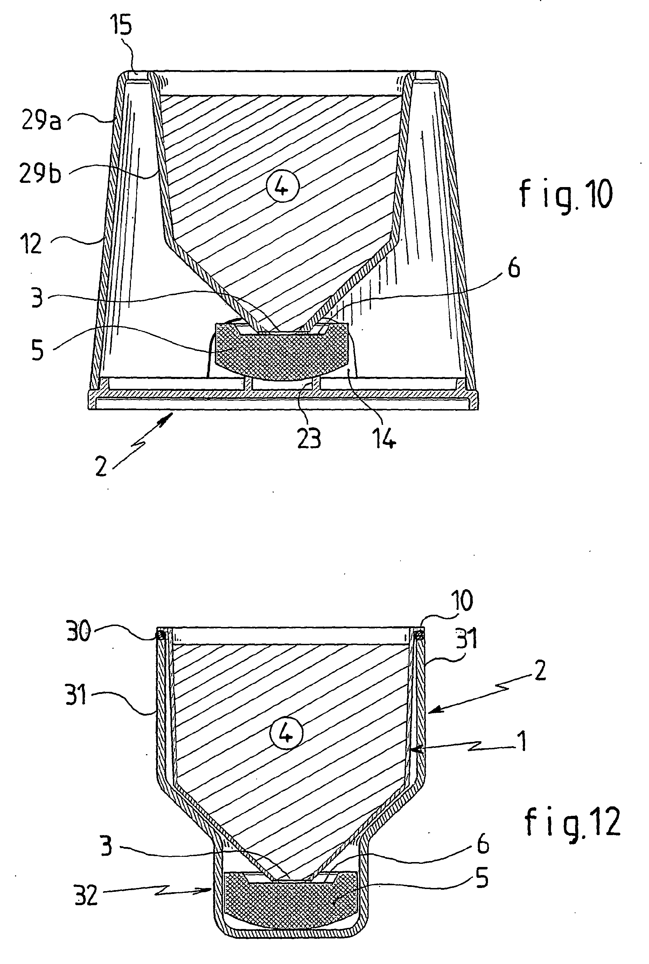

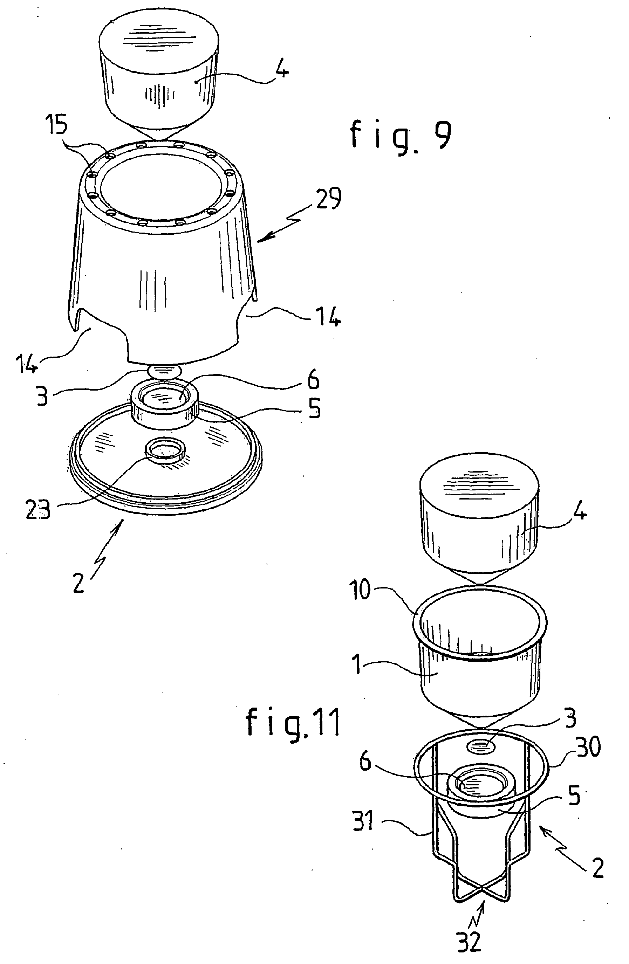

Selon une quatrième variante d'exécution du dispositif fumigène suivant l'invention, en référence aux figures 9 et 10, ce dernier est constitué d'un fond formant support 2 consistant en un disque muni de la même manière que la troisième variante d'exécution représentée sur les figures 5 et 6, dans sa partie centrale, d'un plot cylindrique 23 sur lequel est apte à prendre appui une pastille de charbon 5. Le dispositif comprend, par ailleurs, un corps de révolution 29 à double paroi comprenant une première paroi 29a formant une enveloppe dite externe 12 tronconique s'évasant depuis son extrémité supérieure jusqu'à son extrémité inférieure ouverte apte à venir coiffer le support 2 en prenant appui sur ce dernier. La seconde paroi 29b du corps de révolution 29 forme une seconde enveloppe dite interne 1 globalement tronconique s'évasant depuis son extrémité inférieure ouverte, obturée par un opercule thermofusible 3, jusqu'à son extrémité supérieure confondue avec l'extrémité supérieure de l'enveloppe dite externe 12 de telle sorte que l'enveloppe interne 1 s'étende coaxialement à l'enveloppe externe 12 à l'intérieur de cette dernière en formant un espace entre la paroi intérieure de l'enveloppe externe 12 et la paroi extérieure de l'enveloppe interne 1. De plus, l'extrémité inférieure de l'enveloppe interne 1 prend appui sur la face supérieure de la pastille de charbon 5 positionnée sur le plot central 23 du support 2 lorsque le corps de révolution coiffe ce dernier. On notera, par ailleurs, que l'enveloppe externe 12 comprend des ouvertures 14 pratiquées à son extrémité inférieure et des trous 15 uniformément répartis à son extrémité supérieure afin de permettre une circulation de l'air entre l'enveloppe externe 12 et l'enveloppe interne 1.

Selon une autre variante d'exécution du dispositif fumigène suivant l'invention, en référence aux figures 11 et 12, ce dernier est constitué de la même manière que précédemment d'une enveloppe dite interne 1 globalement tronconique de telle sorte que la grande base de ladite enveloppe 1 se situe au-dessus de sa petite base fermée par un opercule thermofusible 3, la charge pulvérulente fumigène 4 étant positionnée dans ladite enveloppe interne 1 qui comprend à son extrémité supérieure une collerette périphérique 10 apte à prendre appui sur un support 2 en fils d'acier. Ce support 2 comprend un anneau circulaire 30 s'étendant horizontalement à l'extrémité supérieure de quatre pieds verticaux 31 joints dans leurs parties inférieures, le point de jonction des pieds 31 du support 2, étant confondu avec l'axe de révolution de l'anneau 30 et de l'enveloppe interne 1. Les pieds verticaux 31 sont coudés dans leur partie inférieure, en direction dudit axe de révolution pour former un godet 32 apte à recevoir une pastille de charbon 5 dont la face supérieure est au contact de l'opercule thermofusible 3 fermant l'extrémité inférieure de l'enveloppe dite interne 1 lorsque la collerette périphérique 10 de cette dernière prend appui sur l'anneau circulaire 30 du support 2.

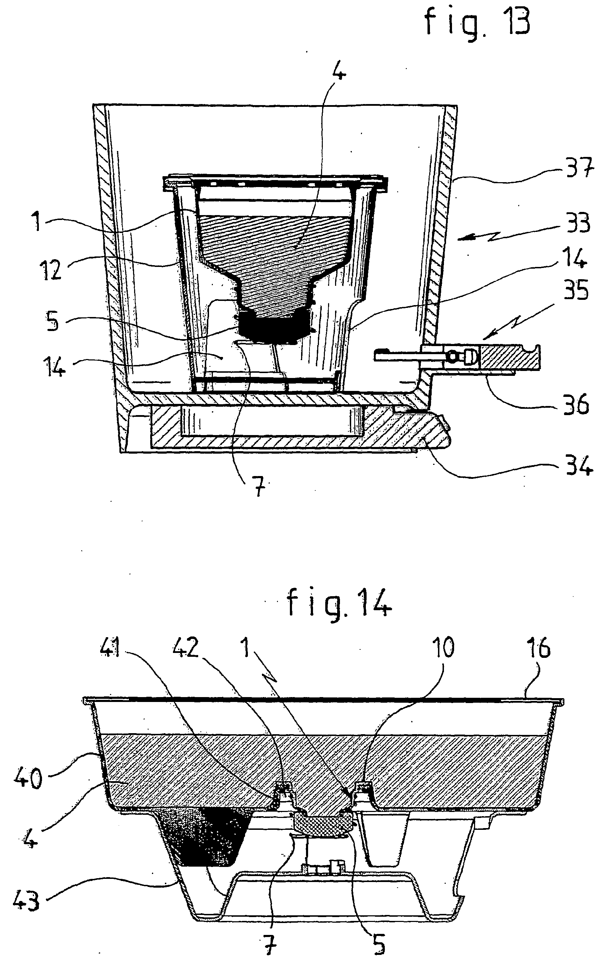

Accessoirement en référence à la figure 13, le dispositif peut avantageusement comprendre une embase 33 dite d'allumage comportant une base 34 munie de moyens d'alimentation, non représentés sur la figure, d'un dispositif d'allumage 35 solidaire d'une glissière 36 s'étendant radialememnt depuis la paroi latérale d'une enceinte 37 globalement cylindrique prenant appui sur la base 34 et dans laquelle est positionnée le dispositif fumigène suivant l'invention de telle sorte que l'une des ouvertures 14 pratiquées à proximité de l'extrémité inférieure de l'enveloppe externe 12 du dispositif soit globalement au droit du dispositif d'allumage 35. Ce dispositif d'allumage 35 consiste, par exemple, en un dispositif d'allumage piezoélectrique qui est apte à glisser depuis une première position rétractée où il s'étend au droit de l'ouverture 14 de l'enveloppe externe 12 du dispositif jusqu'à une position active où il s'étend sous la pastille de charbon 5 afin d'amorcer la combustion de cette dernière. Il va de soi que tout autre dispositif d'allumage peut être envisagé par exemple un allumage électrique initiant la combustion par effet JOULE.

Selon enfin une dernière variante schématiquement représentée en figure 14, le dispositif conforme à l'invention peut être adapté pour une charge fumigène 4 de grand volume. Dans cette variante la charge 4 qui était dans les variantes précédentes entièrement comprise à l'intérieur de l'enveloppe interne 1 se trouve disposée à l'intérieur d'un réceptacle 40 cylindrique ou tronconique de plus grand diamètre que l'enveloppe 1, comportant en son fond une cheminée cylindrique ou tronconique 41 remontant vers l'intérieur du réceptacle 40 pour venir s'ajuster de manière concentrique à l'extrémité supérieure de l'enveloppe interne 1 du dispositif ; comme dans les variantes précédentes, l'enveloppe 1 est munie d'une collerette périphérique 10 venant reposer sur une collerette correspondante disposée à la partie supérieure de l'ouverture tronconique 21 au fond du réceptacle 40. L'enveloppe interne 1 et la cheminée 41 du réceptacle 40 sont solidarisées au milieu par des moyens 42 type circlips ou tout autre moyen connu de l'Homme du Métier.

Le dispositif est également muni d'une pastille de charbon 5 maintenue en contact de la partie inférieure de l'enveloppe interne 1 au moyen d'un ressort 7 ; le dispositif est en tous points conforme aux exécutions précédentes tels que par exemple décrits pour la variante 2 (figure 2). Il est clair que les moyens pour amorcer la combustion du charbon et par la suite de la charge fumigène 4 peuvent être obtenus par tous les moyens indiqués précédemment c'est-à-dire par une allumette ou tout autre moyen electrique, piezoélectrique ou autre. Pour supporter le réceptacle 40, de grand diamètre, on prévoit de disposer un support externe 43 dont la partie inférieure vient comme dans les précédentes exécutions maintenir l'ensemble au sol et procurer les accès possibles pour l'allumage de l'élément de combustion 5 ainsi que pour la ventilation nécessaire à l'entretien de sa combustion. On notera toutefois qu'il n'y a plus ici l'effet cheminée comme dans les exécutions précédentes, les ouvertures dans l'enveloppe 43 étant prévues pour que cette combustion soit suffisamment entretenue pour une mise à feu correcte de la charge fumigène 4. Enfin, un capot 16 est prévu en fermeture supérieure du réceptacle 40 fonctionnant comme il a été expliqué à propos de la deuxième variante notamment.

Il va de soi que la cheminée 41 prévue au centre du fond de réceptacle 40 ne présente aucune fonction particulière dans l'invention, elle ne sert qu'au montage dudit réceptacle 40 sur la collerette 10 de l'enveloppe 1 ; on pourrait donc diminuer la hauteur de cette cheminée 41, voire la supprimer, pour ne garder qu'une ouverture venant en appui sous la collerette 10 autour de l'enveloppe interne 1 pour y être solidarisée.

Il est bien évident que la pastille de charbon 5 peut être substituée par tout autre moyen de combustion et que les exemples que l'on vient de donner ne sont que des illustrations particulières en aucun cas limitatives quant aux domaines d'application de l'invention.

## Revendications

1. Dispositif fumigène du type comportant une charge pulvérulente fumigène (4) insecticide, bactéricide, fongicide, de signalisation ou similaire contenue dans un récipient muni de moyens d'allumage de ladite charge fumigène (4) **caractérisé en ce qu'**il est constitué d'une part d'un support (2, 43) destiné à maintenir globalement verticalement une première enveloppe dite interne (1) s'étendant globalement verticalement, ouverte à son extrémité supérieure et fermée à son extrémité inférieure par un opercule thermofusible (3), la charge pulvérulente fumigène (4) étant positionnée dans ladite enveloppe interne (1), et d'autre part, des moyens de combustion (5) positionnés sous l'enveloppe interne (1) au contact de l'opercule thermofusible (3).

2. Dispositif fumigène suivant la revendication précédente **caractérisé en ce que** l'enveloppe interne (1) consiste en une enveloppe globalement tronconique dont la grande base ouverte se situe au dessus de sa petite base fermée par l'opercule thermofusible (3).

3. Dispositif fumigène suivant l'une quelconque des revendications précédentes **caractérisé en ce que** les moyens de combustion consistent en une pastille de charbon (5).

4. Dispositif fumigène suivant la revendication 3 **caractérisé en ce que** la pastille de charbon (5) comprend sur l'une de ses faces un creux (6) formant une cuvette au fond de laquelle prend appui le bord de la petite base de l'enveloppe interne (1) munie de son opercule thermofusible (3).

5. Dispositif fumigène suivant l'une quelconque des revendications 3 ou 4 **caractérisé en ce qu'**il comprend des moyens dits de retenue (7) assurant le maintien de la pastille de charbon (5) contre l'opercule thermofusible (3) de la petite base de l'enveloppe interne (1).

6. Dispositif fumigène suivant la revendication 5 **caractérisé en ce que** les moyens de retenue consistent en un ressort hélicoïdal (7) fermé à l'une de ses extrémités, de section circulaire tout juste supérieure à la section de la pastille de charbon (5) afin de permettre le positionnement de ladite pastille (5) entre les spires du ressort (7), et dont l'extrémité libre est apte à coopérer avec des moyens de fixation (8) solidaires de la paroi extérieure de l'enveloppe interne (1) à proximité de sa petite base.

7. Dispositif fumigène suivant la revendication 5 **caractérisé en ce que** les moyens de fixation consistent en au moins deux ergots radiaux (8) diamétralement opposés.

8. Dispositif fumigène suivant la revendication 6 ou 7 **caractérisé en ce qu'**il comprend un film d'étanchéité thermofusible (9) placé entre les spires du ressort hélicoïdal (7) et la pastille de charbon (5).

9. Dispositif fumigène suivant l'une quelconque des revendications précédentes **caractérisé en ce que** la grande base de l'enveloppe interne (1) est fermée par un capot (16) perforé et amovible, les perforations (17) du capot (16) permettant, outre l'échappement des fumées produites par la combustion de la charge fumigène (4) contenue dans l'enveloppe interne (1), de limiter la projection de poudre incandescente.

10. Dispositif suivant la revendication 9 **caractérisé en ce que** les perforations (17) du capot (16) sont obturées par un film thermofusible (20) positionné sur la paroi intérieure et/ou extérieure dudit capot (16).

11. Dispositif suivant l'une quelconque des revendications précédentes **caractérisé en ce que** l'extrémité supérieure de l'enveloppe interne (1) comprend une collerette périphérique (10) apte à prendre appui sur le bord supérieur d'une seconde enveloppe dite externe (12), cylindrique ou tronconique, formant un support, de telle sorte que ladite enveloppe interne (1) s'étende coaxialement à l'enveloppe externe à l'intérieur de cette dernière en formant un espace entre la paroi intérieure de l'enveloppe externe (12) et la paroi extérieure de l'enveloppe interne (1).

12. Dispositif suivant la revendication 11 **caractérisé en ce que** l'enveloppe externe (12) comprend au moins une ouverture (14) à proximité de son extrémité inférieure.

13. Dispositif suivant les revendications 11 et 12 **caractérisé en ce que** la collerette périphérique (10) comprend des trous (15) afin de permettre une circulation de l'air entre l'enveloppe externe (12) et l'enveloppe interne (1) depuis le fond (13) vers l'extrémité supérieure de ladite enveloppe externe (12).

14. Dispositif suivant l'une quelconque des revendications précédentes **caractérisé en ce que** l'opercule thermofusible (3) et/ou le film thermofusible (20) et/ou le film d'étanchéité (9) consistent en un film de polypropylène ou de chlorure de polyvinyle ou de polyéthylène d'une épaisseur de quelques microns.

15. Dispositif suivant l'une quelconque des revendications précédentes **caractérisé en ce que** l'enveloppe externe (12) est obtenue dans du polypropylène.

16. Dispositif suivant l'une quelconque des revendications 1 à 15 **caractérisé en ce que** l'enveloppe interne (1) est obtenue dans du polyamide chargé en fibre de verre.

17. Dispositif selon l'une quelconque des revendications 1 à 10, 14 ou 16 **caractérisé en ce que** un réceptacle (40) cylindrique ou tronconique de diamètre plus grand que le diamètre supérieur de l'enveloppe interne (1) comporte une cheminée (41) cylindrique ou tronconique s'étendant vers l'intérieur et au fond dudit réceptacle, concentriquement à l'enveloppe interne (1) au bord supérieur (10) de laquelle elle est solidarisée par son extrémité supérieure, un support (43) venant maintenir le réceptacle (40) et accueillir les moyens de combustion (5) positionnés sous l'enveloppe interne (1).

18. Dispositif suivant la revendication 17 **caractérisé en ce que** la cheminée (41) est remplacée par une ouverture qui vient en appui sous la collerette (10) autour de l'enveloppe interne (1) pour y être solidarisée.

## Claims

1. A smoke device comprising a powdery smoke charge (4), which contains an insecticide, bactericide and a fungicide having a similar signalling and is placed in a container provided with means for igniting said smoke charge (4) **characterised in that** it comprises, on one hand, a support (2, 43) for holding in a substantially vertical position a first internal envelope (1) extending in a substantially vertical direction, open at the upper end thereof and closed at the lower end thereof by an internal thermofusible cap (3), the powdery smoke charge (4) being positioned in said internal envelope (1), and on the other hand, combustion means (5) positioned under the internal envelope (1) in such a way that it contacts the thermofusible cap (3).

2. A smoke device according to the preceding claim **characterised in that** said internal envelope (1) consists of a substantially tapered envelope the large open base of which is located above the small base thereof closed by the thermofusible cap (3).

3. A smoke device according to any one of the preceding claims **characterised in that** the combustion means consist of a coal pellet (5).

4. A smoke device according to claim 3 **characterised in that** the coal pellet (5) comprises on one of the faces thereof a hollow (6) forming a cup at the base of which is bearing the edge of the small base of the internal envelope (1) provided with the thermofusible cap thereof (3).

5. A smoke device according to any one of claims 3 or 4 **characterised in that** it comprises retention means (7) providing the retention of the coal pellet (5) against the thermofusible cap (3) of the small base of the internal envelope (1).

6. A smoke device according to claim 5 **characterised in that** the retention means consist of a helical spring (7) closed at one of the ends thereof, of circular cross-section only just larger than the cross-section of the coal pellet (5) to enable the positioning of said pellet (5) between the coils of the spring (7), and the free end of which is suitable for engaging with the attachment means (8) rigidly connected to the outer wall of the internal envelope (1) close to the small base thereof.

7. A smoke device according to claim 5 **characterised in that** the attachment means consist of at least two radial lugs (8) diametrically opposite.

8. A smoke device according to claims 6 or 7 **characterised in that** it comprises a thermofusible sealing film (9) placed between the coils of the helical spring (7) and the coal pellet (5).

9. A smoke device according to any one of the preceding claims **characterised in that** the large base of the internal envelope (1) is closed by a perforated and removable hood (16), the perforations (17) of the hood (16) enabling, in addition to the escaping of smoke produced by the combustion of the smoke charge (4) contained in the internal envelope (1), the projection of incandescent powder to be limited.

10. A device according to claim 9 **characterised in that** the perforations (17) of the hood (16) are blocked by a thermofusible film (20) positioned on the inner and/or outer wall of said hood (16).

11. A device according to any one of the preceding claims **characterised in that** said upper end of the internal envelope (1) comprises a peripheral flange (10) suitable for bearing on the upper edge of a second external envelope (12), cylinder-shaped or tapered, forming a support, such that said internal envelope (1) extends coaxially to the external envelope inside of said latter forming a space between the inner wall of the external envelope (12) and the outer wall of the internal envelope (1).

12. A device according to claim 11 **characterised in that** the external envelope (12) comprises at least one opening (14) close to the lower end thereof.

13. A device according to claims 11 and 12 **characterised in that** the peripheral flange (10) comprises holes (15) in order to enable a circulation of the air between the external envelope (12) and internal envelope (1) from the bottom (13) towards the upper end of said external envelope (12).

14. A device according to any one of the preceding claims **characterised in that** the thermofusible cap (3) and/or thermofusible film (20) and/or sealing film (9) consist of a polypropylene or polyvinyl chloride or polyethylene film with a thickness of a few microns.

15. A device according to any one of the preceding claims **characterised in that** said external envelope (12) is obtained in polypropylene.

16. A device according to any one of claims 1 to 15 **characterised in that** the internal envelope (1) is obtained in polyamide loaded with glass fibre.

17. A device according to any one of claims 1 to 10, 14 or 16 **characterised in that** a cylinder-shaped or tapered receptacle (40) with a diameter larger than the upper diameter of the internal envelope (1) comprises a cylinder-shaped or tapered chimney (41) extending towards the inside and at the bottom of said receptacle, concentrically to the internal envelope (1) at the upper edge (10) of which it is rigidly connected by the upper end thereof, a support (43) holding the receptacle (40) and accommodating the combustion means (5) positioned under the internal envelope (1).

18. A device according to claim 17 **characterised in that** the chimney (41) is replaced by an opening which rests below the flange (10) around the internal envelope (1) to be rigidly connected thereto.

## Patentansprüche

1. Raucherzeugungsvorrichtung von der Art, die eine pulverförmige, insektizide, bakterizide, fungizide raucherzeugende Ladung (4) besitzt und zur Signalisierung oder anderen Zwecken dient, in einem Behälter untergebracht ist, der mit einer Vorrichtung zum Entzünden der besagten raucherzeugenden Ladung (4) dient, **dadurch gekennzeichnet, dass** sie einerseits aus einer Aufnahme (2, 43) besteht, die dazu dient, weitgehend senkrecht eine erste, sogenannte innere Verpackung (1) aufzunehmen, die sich weitgehend senkrecht erstreckt, an ihrem oberen Ende offen und an ihrem unteren Ende mit einem unter Hitze schmelzenden Verschluss (3) geschlossen ist, wobei die raucherzeugende Ladung (4) in der inneren Verpackung (1) untergebracht ist, und dass sie andererseits Verbrennungsmittel (5) besitzt, die unter der inneren Verpackung (1) in Berührung mit dem unter Hitze schmelzenden Verschluss (3) angebracht sind.

2. Raucherzeugungsvorrichtung nach dem vorhergehenden Anspruch, **dadurch gekennzeichnet, dass** die innere Verpackung (1) aus einer weitgehend kegelstumpfförmigen Verpackung besteht, deren große offene Basis über ihrer kleinen durch den unter Hitze schmelzenden Verschluss (3) geschlossenen Basis befindet.

3. Raucherzeugungsvorrichtung nach einem der vorhergehenden Ansprüche, **dadurch gekennzeichnet, dass** die Verbrennungsmittel aus einer Kohlenstoffpastille (5) bestehen.

4. Raucherzeugungsvorrichtung nach Anspruch 3, **dadurch gekennzeichnet, dass** die Kohlenstoffpastille (5) auf einer Seite eine schalenförmige Vertiefung (6) besitzt, auf deren Boden die kleine Basis der inneren Verpackung (1) mit ihrem unter Hitze schmelzenden Verschluss (3) aufliegt.

5. Raucherzeugungsvorrichtung nach einem der Ansprüche 3 oder 4, **dadurch gekennzeichnet, dass** sie eine Haltevorrichtung (7) besitzt, mit denen die Kohlenstoffpastille (5) gegen den unter Hitze schmelzenden Verschluss (3) der kleinen Basis der inneren Verpackung (1) gehalten wird.

6. Raucherzeugungsvorrichtung nach Anspruch 5, **dadurch gekennzeichnet, dass** die Haltevorrichtung aus einer Spiralfeder (7) besteht, die an einem ihrer Enden geschlossen ist und einen kreisförmigen Querschnitt besitzt, der geringfügig größer als der Querschnitt der Kohlenstoffpastille (5) ist, um das Anbringen der besagten Pastille zwischen den Windungen der Spiralfeder (7) zu ermöglichen, und deren freies Ende dazu geeignet ist, mit Befestigungsmitteln (8) zusammenzuwirken, die fest an der Außenwand der inneren Verpackung (1) in der Nähe ihrer kleinen Basis angebracht sind.

7. Raucherzeugungsvorrichtung nach Anspruch 5, **dadurch gekennzeichnet, dass** die Befestigungsmittel aus mindestens zwei sich gegenüber befindlichen radialen Stiften (8) bestehen.

8. Raucherzeugungsvorrichtung nach Anspruch 6 oder 7, **dadurch gekennzeichnet, dass** sie eine unter Hitze schmelzende Dichtfolie (9) zwischen den Windungen der Spiralfeder (7) und der Kohlenstoffpastille (5) besitzt.

9. Raucherzeugungsvorrichtung nach einem der vorhergehenden Ansprüche, **dadurch gekennzeichnet, dass** die große Basis der inneren Verpackung (1) mit einem perforierten, abnehmbaren Deckel (16) verschlossen ist, wobei die Perforationen (17) in dem Deckel (16) einerseits das Austreten des bei der Verbrennung der in der inneren Verpackung (1) befindlichen raucherzeugenden Ladung (4) gebildeten Rauchs ermöglichen und andererseits das Herausschleudern von brennendem Pulver begrenzen.

10. Raucherzeugungsvorrichtung nach Anspruch 9, **dadurch gekennzeichnet, dass** die Perforationen (17) im Deckel (16) mit einer unter Hitze schmelzenden Folie (20) abgedeckt sind, wobei diese Folie auf der inneren und/oder auf der äußeren Seite des Deckels (16) angebracht sein kann.

11. Raucherzeugungsvorrichtung nach einem der vorhergehenden Ansprüche, **dadurch gekennzeichnet, dass** das obere Ende der inneren Verpackung (1) einen umlaufenden Wulst (10) besitzt, der auf dem oberen Rand einer zweiten, zylindrischen oder kegelstumpfförmigen sog. äußeren Verpackung (12) aufliegen kann, so dass die innere Verpackung (1) achsgleich zur äußeren Verpackung in deren Innenraum hineinragt, wobei zwischen der Innenwand der Äußeren Verpackung (12) und der Außenwand der inneren Verpackung (1) ein bestimmter Zwischenraum entsteht.

12. Raucherzeugungsvorrichtung nach Anspruch 11, **dadurch gekennzeichnet, dass** die äußere Verpackung (12) in der Nähe ihres unteren Endes mindestens eine Öffnung (14) besitzt.

13. Raucherzeugungsvorrichtung nach Anspruch 11 und 12, **dadurch gekennzeichnet, dass** in dem umlaufenden Wulst (10) Öffnungen (15) vorgesehen sind, um zwischen der äußeren Verpackung (12) und der inneren Verpackung (1) vom Boden (13) der äußeren Verpackung (12) zu deren oberen Ende hin Luft durchzulassen.

14. Raucherzeugungsvorrichtung nach einem der vorhergehenden Ansprüche, **dadurch gekennzeichnet, dass** der unter Hitze schmelzende Verschluss (3) oder die unter Hitze schmelzende Folie (20) und/oder die Dichtfolie (9) aus Polypropylen oder aus Polyvinylchlorid bestehen und eine Stärke von einigen Mikrometern besitzen.

15. Raucherzeugungsvorrichtung nach einem der vorhergehenden Ansprüche, **dadurch gekennzeichnet, dass** die äußere Verpackung (12) aus Polypropylen besteht.

16. Raucherzeugungsvorrichtung nach einem der Ansprüche 1 bis 15, **dadurch gekennzeichnet, dass** die innere Verpackung (1) aus glasfaserverstärktem Polyamid besteht.

17. Raucherzeugungsvorrichtung nach einem der Ansprüche 1 bis 10, 14 oder 16, **dadurch gekennzeichnet, dass** ein zylindrischer oder kegelstumpfförmiger Behälter (40) mit einem Durchmesser, der größer als der der inneren Verpackung (1) ist, einen zylindrischen oder kegelstumpfförmigen, nach innen und bis zum Boden des Behälters reichenden Kamin (41) besitzt, der konzentrisch zur inneren Verpackung (1) angeordnet und am oberen Rand (10) fest mit ihr verbunden ist, wobei der Behälter (40) auf einer Aufnahme (43) aufliegt, in der auch die Verbrennungsmittel (5) unter der inneren Verpackung (1) angebracht sind.

18. Raucherzeugungsvorrichtung nach Anspruch 17, **dadurch gekennzeichnet, dass** das Kamin (41) durch eine unter dem Wulst (10) auf der inneren Verpackung (1) aufliegenden Öffnung ersetzt wird, um dort fest mit ihr verbunden zu werden.
